# EUROPÄISCHE PATENTSCHRIFT

(11) **EP 3 577 367 B1**
(45) Veröffentlichungstag und Bekanntmachung des Hinweises auf die Patenterteilung: **07.06.2023**
(21) Anmeldenummer: 18756381.2
(22) Anmeldetag: 02.08.2018
(51) Int. Cl.: F16F 9/44, F16F 9/56, F16F 9/19, F16F 9/512, F16F 9/46, E05F 5/00, E05F 5/10

(54) **FLUIDDÄMPFER FÜR GEGENEINANDER VERSTELLBARE KÖRPER MIT EINEM IN EINEM ZYLINDER VERSTELLBAR GEFÜHRTEN KOLBEN**
FLUID DAMPER FOR MUTUALLY ADJUSTABLE PARTS OF A PIECE OF FURNITURE WITH AN ADJUSTABLE PISTON WHICH CAN BE GUIDED IN A CYLINDER
AMORTISSEUR À FLUIDE POUR PARTIES DE MEUBLES RÉGLABLES LES UNES PAR RAPPORT AUX AUTRES POURVU D'UN PISTON GUIDÉ DE MANIÈRE RÉGLABLE DANS UN CYLINDRE

(30) Priorität: 02.08.2017 EP 17184424
(43) Veröffentlichungstag der Anmeldung: 11.12.2019
(73) Patentinhaber: Held, Wolfgang, 6971 Hard (AT)
(72) Erfinder: Held, Wolfgang, 6971 Hard (AT)
(74) Vertreter: Jeck, Anton
(86) Internationale Anmeldenummer: PCT/EP2018/071062
(87) Internationale Veröffentlichungsnummer: WO 2019/025568

(56) Entgegenhaltungen:
- WO-A2-2007/099100
- DE-A1-102015 109 188
- DE-U1-202014 002 228
- FR-A1- 2 347 575
- GB-A- 1 161 859
- GB-A- 2 106 216
- JP-A- H01 145 440
- JP-A- S61 160 638
- US-A- 5 014 966
- US-A1- 2009 020 005

## Beschreibung

Die Erfindung betrifft einen Fluiddämpfer für gegeneinander verstellbare Körper, insbesondere Möbelteile, mit einem in einem Zylinder verstellbar geführten Kolben.

Der Kolben unterteilt den Zylinder in zwei Fluidräume. Damit bei einer Bewegung des Kolbens im Zylinder entlang dessen Längs- oder Zylinderachse ein Fluidaustausch zwischen den beiden Fluidräumen stattfinden kann, ist im Kolben und/oder zwischen Kolben und Zylinder zumindest eine Durchlassöffnung vorgesehen.

Bei axialer Bewegung der Kolbenstange und damit des Kolbens gegenüber dem Zylinder muss das Fluid durch die Durchlassöffnung im Kolben und/oder zwischen Kolben und Zylinder strömen. Durch den Widerstand, der dem Fluid dabei entgegengebracht wird, werden Druckdifferenzen zwischen den Fluidräumen erzeugt, welche eine Dämpfungskraft bewirken.

Bei einem Fluiddämpfer nach der DE 20 2014 002 228 U1 ist der Kolben mit einer aus dem Zylinder herausgeführten Kolbenstange verbunden. Die Kolbenstange ist mit dem verstellbaren Möbelteil in Kontakt bringbar. Der Zylinder ist mit dem kolbenstangenfreien geschlossenen Ende mit dem feststehenden Möbelteil verbunden. Im Kolben ist eine Durchlassöffnung für ein im Zylinder befindliches Fluid vorgesehen. Beim Bewegen der Körper gegeneinander verschließt in Abhängigkeit von der Geschwindigkeit oder vom Druck auf die Kolbenstange ein auf dem Kolben drehbar gelagerter Flügel die Durchlassöffnung im Kolben fortschreitend, einhergehend mit einer Verkleinerung des Durchflussquerschnitts. Beim Bewegen der Körper voneinander stellt eine Feder den Flügel auf dem Kolben zurück und gibt die Durchlassöffnung frei. Der Zylinder ist an der offenen Stirnseite dabei mit einem Verschlussteil verschlossen.

Durch die DE 20 2005 020 820 U1 ist ebenfalls ein Fluiddämpfer bekannt. Damit bei diesem bekannten Fluiddämpfer bei Überlast, d. h. bei großer Druckbeaufschlagung, eine extreme Dämpfung verhindert wird, ist vorgeschlagen, dass oberhalb eines Schwellwerts der Druckbeaufschlagung auf den Fluiddämpfer zumindest eine Überlastöffnung im Kolben und/oder zwischen Kolben und Zylinder geöffnet wird. Dadurch wird erreicht, dass kein Dämpferprellen auftritt und ein hartes Schließen der Körper verhindert wird, ohne dass der Schwellwert der Druckbeaufschlagung durch eine spezielle Ausgestaltung der Durchlassöffnung im Kolben bzw. zwischen Kolben und Zylinder erreicht wird und ohne dass dafür besondere Formen und Größen der Durchlassöffnungen gewählt werden müssen.

Dem Stand der Technik ist gemein, dass der Widerstand beispielsweise durch die Größe der Durchlassöffnungen vorgegeben ist. Der Widerstand ist am Fluiddämpfer zur Anpassung an regelmäßig durch beispielsweise unterschiedlich große und unterschiedlich schwere, entsprechend unterschiedlich träge gegeneinander verstellbare Körper sich ergebende verschiedene Anwendungszwecke nachträglich nicht einstellbar.

Durch WO 2007/099100 ist ein Dämpfer für Möbel bekannt. Dieser umfasst ein Gehäuse, in dem ein mit einer Kolbenstange verbundener Kolben verschiebbar aufgenommen ist. Bei einer Bewegung des Kolbens innerhalb des Gehäuses strömt ein Fluid durch einen Strömungskanal im oder am Kolben. Bei Bewegung des Kolbens in unterschiedliche Richtungen wird eine unterschiedliche Dämpfung erhalten. Dies erfolgt vermittels einer in Bewegungsrichtung des Kolbens relativbewegliche Platte. Auf dieser sind zum Kolben hin Vorsprünge angeordnet, welche einen kleinsten Querschnitt des Strömungskanals in einer ersten Bewegungsrichtung des Kolbens festlegen. In entgegengesetzter Bewegungsrichtung kann die Platte vom Kolben abheben und gibt dadurch einen größeren Querschnitt frei. Der Strömungskanal kann durch unterschiedliche hohe Vorsprünge auf der Platte an verschiedene gewünschte Dämpfungseigenschaften angepasst werden. Hierdurch werden durch unterschiedliche Platten mit verschieden hohen Vorsprüngen Dämpfer mit verschiedenen Dämpfungseigenschaften erhalten. Ohne einen mit einem Zerlegen eines fertiggestellten Dämpfers verbundenen Austausch der jeweils verbauten Platte ist keine Veränderung der Dämpfungseigenschaften möglich. Eine einfache, nachträgliche Anpassung der Dämpfungseigenschaften eines fertiggestellten Dämpfers ist damit nicht möglich.

Durch DE 195 32 996 B4 ist eine Gasfeder bekannt, bei der die Ausfahrgeschwindigkeit einer mit einem in einem Zylinder längsverschiebbar geführten, den Zylinder in zwei Fluidräume unterteilenden Kolben verbundenen Kolbenstange durch Veränderung der Länge eines durch den Kolben führenden Strömungsweges einstellbar ist. Der Querschnitt des Strömungswegs wird bei einer Veränderung der Länge des Strömungsweges nicht verändert. Der Kolben ist an der Kolbenstange entlang und in seiner Drehlage um die Längsachse des Zylinders beweglich geführt.

Durch WO 85/04935 A1 ist ein Lineardämpfer mit einem in einem Zylinder entlang dessen Längsachse und in seiner Drehlage um diese beweglich geführten Kolben bekannt. Der Kolben unterteilt den Zylinder in zwei Fluidräume. Im Kolben sind Durchlassöffnungen für den zwischen den Fluidräumen zur Bewegung des Kolbens entlang der Längsachse erforderlichen Fluidausgleich angeordnet. In zumindest einigen der Durchlassöffnungen sind Einwegventile angeordnet. Eine mit dem Kolben entlang der Längsachse bewegliche Einstellscheibe kann von außerhalb des Zylinders über eine sich entlang der Längsachse erstreckende und mit einem Einstellrad verbundene Einstellwelle verdreht werden, um zwischen drei Einstellungen umzuschalten:
- gleicher, hoher Strömungswiderstand beim Bewegen des Kolbens gegenüber dem Zylinder in beiden, entgegengesetzten Richtungen entlang der Längsachse des Zylinders,
- hoher Strömungswiderstand beim Bewegen des Kolbens in einer ersten Richtung, niedriger Strömungswiderstand beim Bewegen des Kolbens in einer der ersten Richtung entgegengesetzten zweiten Richtung, und
- niedriger Strömungswiderstand beim Bewegen des Kolbens in der ersten Richtung, hoher Strömungswiderstand beim Bewegen des Kolbens in der der ersten Richtung entgegengesetzten zweiten Richtung.

Durch DE 1996320 U ist ein hydraulischer Dämpfer bekannt. Dieser umfasst einen Zylinder und einen entlang dessen Längsachse und in seiner Drehlage um diese beweglich angeordneten und den Zylinder in zwei Fluidräume unterteilenden Kolben.

Eine mit Kanälen versehene Schließplatte, welche durch eine Federbelastung gegen den Kolben gedrückt wird, ist um eine Kolbenstange verdrehbar angeordnet. Im Kolben sind Durchlassöffnungen für den zwischen den Fluidräumen zur Bewegung des Kolbens entlang der Längsachse erforderlichen Fluidausgleich angeordnet. Je nach gewählter Drehstellung der Schließplatte werden die Durchlassöffnungen mehr oder weniger freigegeben. Eine Zugänglichkeit oder gar Einstellbarkeit der Schließplatte zur nachträglichen Einflussnahme am fertig zusammengebauten Dämpfer auf die Freigabe der Durchlassöffnungen ist nicht vorgesehen.

WO 2007099100 A2 betrifft einen Dämpfer für Möbel, insbesondere für Scharniere, mit einem Gehäuse, in dem ein mit einer Kolbenstange verbundener Kolben verschiebbar aufgenommen ist, wobei ein Fluid bei einer Bewegung des Kolbens innerhalb des Gehäuses durch einen Strömungskanal am oder im Kolben strömt, wobei bei Bewegung des Kolbens in unterschiedliche Richtungen eine unterschiedliche Dämpfungskraft erhalten wird.

Die JP H01 145440 betrifft einen Dämpfer mit einem Kolben in einem Gehäuse. Dieser komprimiert beim Hineindrücken des Kolbens die Luft in dem Raum B. Ist der Druck hoch genug, öffnet sich ein Ventil 5, welches in dem Gehäuse 1 befestigt ist. Die FR 2347575A1 offenbart ein gedämpftes Führungsmittel für beispielsweise eine Heckklappe eines Autos, welches die Klappe in einer maximal ausgelenkten Position festhalten soll. Zur Unterstützung eines Kolbens sind neben einem erhöhten Gasdruck im Inneren auch eine Vertiefung und ein Flansch vorgesehen, welche miteinander in Eingriff gebracht werden können.

US 5 014 966 A offenbart einen Dämpfer.

Die Aufgabe der Erfindung besteht darin, einen Fluiddämpfer weiter zu verbessern, und zwar ihn an verschiedene Anwendungszwecke anzupassen. Die gestellte Aufgabe wird durch die Merkmale des Anspruchs 1 gelöst.

Vorteilhafte Ausführungsformen sind in den abhängigen Ansprüchen angegeben.

Durch die Voreinstellbarkeit des geometrischen Querschnitts zumindest einer Durchlassöffnung im Kolben und/oder zwischen Kolben und Zylinder kann der Fluiddämpfer an verschiedene Anwendungswecke angepasst werden, beispielsweise an Fachklappen und Türen eines Schranks.

Die Voreinstellbarkeit ist dabei vorteilhaft am fertig zusammengebauten und einsatzbereiten Fluiddämpfer gegeben. Besonders vorteilhaft ist sie von außen zugänglich am fertig zusammengebauten und einsatzbereiten Fluiddämpfer gegeben. Dies wird erfindungsgemäß insbesondere dadurch erreicht, dass der Kolben vermittels einer Arretiervorrichtung in gleichbleibender Drehlage - kurz Lage - relativ zum, beziehungsweise gegenüber dem, Zylinder unverdrehbar entlang der Längsachse beweglich geführt ist. Die Unverdrehbarkeit, also eine starre Verbindung, kann beispielsweise um eine gemeinsame Längsachse gegeben sein. Die Unverdrehbarkeit kann insbesondere so lange gegeben sein, wie die Arretierungsvorrichtung des Kolbens nicht in einen Teil des Zylinders formschlüssig eingreift. Die Unverdrehbarkeit wird durch einen Reibschluss bewirkt, welcher beim formschlüssigen Eingriff der Arretiervorrichtung in einen Teil des Zylinders, insbesondere durch eine Drehbewegung am Kolben, überwindbar ist.

Die Arretiervorrichtung schafft erfindungsgemäß die Möglichkeit einer Einstellung einer Begrenzung. Diese kann zumindest den größtmöglichen, auch als wirksamer Querschnitt der zumindest einen Durchlassöffnung bezeichneten Durchflussquerschnitts des Fluids umfassen. Der wirksame Querschnitt kann an wenigstens einer Stelle der Durchlassöffnung am betriebsbereiten, fertig zusammengebauten, vorzugsweise bereits zwischen gegeneinander verstellbare Körper eingebauten Fluiddämpfer vorliegen.

So kann beispielsweise von außerhalb des Zylinders, beispielsweise durch eine Drehbewegung um die Längsachse des Zylinders, auf einen Durchflussquerschnitt des Fluids Einfluss genommen werden. Dies kann an wenigstens einer Stelle der Durchlassöffnung erfolgen. Ohne Arretiervorrichtung könnte sich einerseits der Kolben gegenüber dem Zylinder verdrehen. Durch eine ungewollte Veränderung der Drehlage des Kolbens gegenüber dem Zylinder kann eine durch eine Drehbewegung vorgenommene Einstellung einer Begrenzung zumindest des größtmöglichen Durchflussquerschnitts des Fluids an der Durchlassöffnung nahteilig veränderbar sein. Weitere Ausbildungen des Fluiddämpfers können den Unteransprüchen entnommen werden.

So ist die Arretiervorrichtung erfindungsgemäß aus folgenden Bauteilen aufgebaut:
- ein Arretierelement in Form einer auf das Ende der Kolbenstange aufbringbaren Hülse,
- das Ende der Hülse, welches dem geschlossenen Ende des Zylinders zugewandt ist, weißt ein außenverzahntes Zahnrad auf
- das andere Ende der Hülse (in Längsrichtung des Zylinders) weist mindestens einen Nocken auf, der in den Kolben eingreift,
- ein innen am geschlossenen Ende des Zylinders angeordnetes innenverzahntes Zahnrad, in das das außenverzahnte Zahnrad eingreift, und
- ein innen am geschlossenen Ende des Zylinders angeordneter zentraler Konus, der die Zähne des außenverzahnten Zahnrads auseinander in das innenverzahnte Zahnrad presst.

Gemäß einer weiteren vorteilhaften Ausbildung der Erfindung ist am außerhalb des Zylinders liegenden Ende der Kolbenstange ein Einstellrad drehfest befestigt. Vorzugsweise trägt dieses Einstellrad eine Außenriefelung.

Die Erfindung wird nun anhand von Zeichnungen näher erläutert. Es zeigen:
- Fig. 1: eine perspektivische Explosionsdarstellung eines Fluiddämpfers aus Zylinder, Arretierelement, Hülse mit Flügel, Feder, Kolben, Kolbenstange, Kerbscheibe, Verschlussteil und Einstellrad,
- Fig. 2: eine vergrößerte perspektivische Explosionsdarstellung des geschlossenen Endteils des Zylinders und dort einsetzbarer Bauteile des Fluiddämpfers der Fig. 1,
- Fig. 3: eine weitere vergrößerte perspektivische Explosionsdarstellung von Bauteilen des Fluiddämpfers der Fig. 1,
- Fig. 4: eine der Fig. 1 ähnelnde perspektivische Darstellung des Fluiddämpfers, jedoch im zusammengebauten Zustand, in dem der Flügel und die Kerbscheibe sich im Ausgangszustand befinden,
- Fig. 5: eine vergrößerte perspektivische Darstellung des linken Teils der Fig. 4 mit aufgeschnittenem Zylinder,
- Fig. 6: eine weitere der Fig. 4 ähnelnde perspektivische Darstellung des Fluiddämpfers mit aufgeschnittenem Zylinder und
- Fig. 7: einen Teilquerschnitt durch den Fluiddämpfer der Fig. 6.

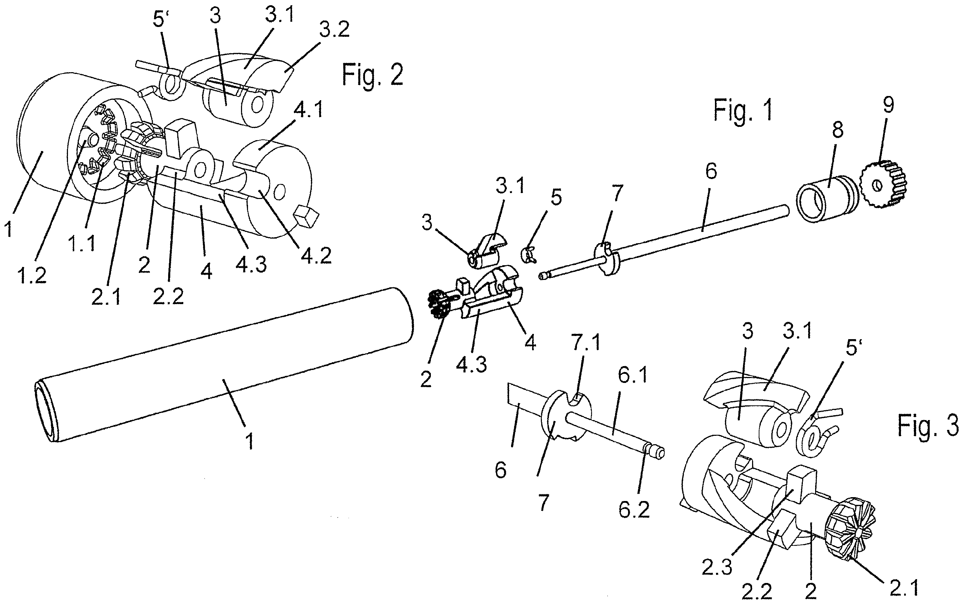

Ein in Fig. 1 bis Fig. 7 ganz oder in Teilen dargestellter Fluiddämpfer für gegeneinander verstellbare Körper ist mit einem in einem Zylinder 1 verstellbar geführten Kolben 4 ausgestattet.

Der Kolben 4 unterteilt den Zylinder in zwei Fluidräume. Damit bei einer Bewegung des Kolbens 4 im Zylinder entlang dessen Längs- oder Zylinderachse ein Fluidaustausch zwischen den beiden Fluidräumen stattfinden kann, ist im Kolben 4 und/oder zwischen Kolben 4 und Zylinder 1 zumindest eine Durchlassöffnung 4.2 für durchströmendes Fluid vorgesehen.

Der Kolben 4 ist zylinderförmig ausgebildet und vorteilhaft mit seinem Außendurchmesser an den Innendurchmesser des Zylinders 1 angepasst.

Alternativ bildet ein Spalt zwischen dem Innendurchmesser des Zylinders 1 und dem Außendurchmesser des Kolbens 4 eine von mehreren Durchlassöffnungen 4.2.

Der Fluiddämpfer zeichnet sich aus durch mindestens ein Einstellmittel zur nachträglichen Einstellung einer Begrenzung zumindest des größtmöglichen, auch als wirksamer Querschnitt der zumindest einen Durchlassöffnung 4.2 bezeichneten Durchflussquerschnitts des Fluids. Die Einstellung des wirksamen Querschnitts erfolgt an wenigstens einer Stelle der Durchlassöffnung 4.2 am betriebsbereiten, fertig zusammengebauten, vorzugsweise bereits zwischen gegeneinander verstellbare Körper eingebauten Fluiddämpfer.

Das oder die Einstellmittel sind zumindest ohne Zerlegen des fertig zusammengesetzten und einsatzbereiten Fluiddämpfers zugänglich und/oder einstellbar. Das oder die Einstellmittel sind besonders vorteilhaft von außen am fertig zusammengesetzten und einsatzbereiten Fluiddämpfer zugänglich und/oder einstellbar.

Mit dem mindestens einen Einstellmittel ist zumindest der größtmögliche Durchflussquerschnitt des Fluids an der Stelle der Fluiddurchlassöffnung 4.2 des Kolbens 4 voreinstellbar.

Die Einschränkung, wonach die Einstellung eine Begrenzung zumindest des größtmöglichen Durchflussquerschnitts des Fluids an der Durchlassöffnung 4.2 zur Folge hat, bezieht zwei Ausgestaltungsmöglichkeiten ein:
1. dass einerseits während der Arbeit des Fluiddämpfers ein konstanter Durchflussquerschnitt vorherrscht;
2. dass sich der Durchflussquerschnitt während der Arbeit des Fluiddämpfers verändert.

Beispielsweise wird der Durchflussquerschnitt mit zunehmender Bewegungsgeschwindigkeit des Kolbens 4 im Zylinder 1 fortschreitend verkleinert. Die Einstelleinrichtung dient in letzterem Fall dazu, den zumindest bei unbewegtem Kolben 4 vorherrschenden maximalen Durchflussquerschnitt per Voreinstellung festzulegen.

Bei dem Durchflussquerschnitt handelt es sich um den geometrischen Querschnitt, der dem Fluid zum Durchströmen von dem einen Fluidraum in den anderen zumindest an einer jüngsten/engsten Stelle der Durchlassöffnung 4.2 zur Verfügung steht. Je kleiner der Querschnitt, desto höher der auf das Fluid beim Durchströmen vom einen in den anderen Fluidraum wirkende Strömungswiderstand. Mit zunehmendem Querschnitt verringert sich der Strömungswiderstand, wodurch in Folge derselben auf den Kolben wirkenden Kraft bei größerem Querschnitt und niedererem Strömungswiderstand im Vergleich zu einem kleinerem Querschnitt und höherem Strömungswiderstand eine schnellere Bewegung des Kolbens 4 im Zylinder 1 stattfindet.

Wichtig ist hervorzuheben, dass eine Veränderung des geometrischen Querschnitts im Rahmen der Erfindung insbesondere eine Veränderung der Querschnittsfläche umfasst, aber alternativ oder zusätzlich auch eine Veränderung der Querschnittsgeometrie und/oder Querschnittsabmessungen umfassen kann. So kann die Voreinstellung zumindest des größtmöglichen Durchflussquerschnitts mit einer Veränderung der Mündungsgeometrie der Fluiddurchlassöffnung 4.2 des Kolbens 4 einhergehen, beispielsweise indem durch Verjüngung/Veränderung des größtmöglichen Durchflussquerschnitts eine ansonsten durchgängig konstante Durchgangsöffnung zumindest in einer Durchströmungsrichtung zu einer Borda-Carnot Mündung wird.

Durch die erfindungsgemäße Einflussnahme auf den geometrischen Querschnitt bleibt beim während des Durchströmens auftretenden Strömungswiderstand die beim erfindungsgemäßen Fluiddämpfer ohnehin zumindest im Wesentlichen konstante Länge des Strömungswegs unbeeinflusst.

Die Erfindung schafft hierdurch eine einfache Möglichkeit auf eine nachträgliche Einflussnahme auf den hydraulischen Querschnitt der Fluiddurchlassöffnung 4.2 am fertig zusammengesetzten Fluiddämpfer.

Der Kolben 4 kann mit einer aus dem Zylinder 1 herausgeführten Kolbenstange 6 verbunden sein. Die Einstellmittel umfassen vorteilhaft eine auf das im Zylinder befindliche Ende der Kolbenstange 6 radial unverdrehbar aufgeschobene, den Kolben 4 in einer gewünschte Lage im Zylinder 1 festhaltende Arretiervorrichtung.

Bei der gewünschten Lage, in welcher die Arretiervorrichtung den Kolben 4 im Zylinder 1 radial unverdrehbar festhält, handelt es sich demnach um die Drehlage des Kolbens 4 relativ zum Zylinder 1 um eine vorteilhaft gemeinsame Längsachse von Kolben 4 und Zylinder 1 gesehen. Eine Bewegung von Kolben 4 und Zylinder 1 relativ zueinander entlang der Längsachse beeinträchtigt die Arretiervorrichtung hingegen nicht.

Die Voreinstellbarkeit ist hierdurch am fertig zusammengebauten und einsatzbereiten Fluiddämpfer gegeben. Dies wird insbesondere dadurch erreicht, dass der Kolben 4 vermittels der/über die Arretiervorrichtung in gleichbleibender, kurz auch als Lage bezeichneter Drehlage relativ zum beziehungsweise gegenüber dem Zylinder 1 beispielsweise um eine gemeinsame Längsachse unverdrehbar entlang der Längsachse beweglich geführt ist.

Die Arretiervorrichtung schafft erfindungsgemäß die Möglichkeit einer Einstellung einer Begrenzung zumindest des größtmöglichen, auch als wirksamer Querschnitt der zumindest einen Durchlassöffnung 4.2 bezeichneten Durchflussquerschnitts des Fluids an wenigstens einer Stelle der Durchlassöffnung 4.2 am betriebsbereiten, fertig zusammengebauten, vorzugsweise bereits zwischen gegeneinander verstellbare Körper eingebauten Fluiddämpfer.

So kann beispielsweise von außerhalb des Zylinders 1 insbesondere durch eine einfach zu verwirklichende Drehbewegung - sei es durch Drehung der Kolbenstange um die Längsachse des Zylinders oder durch eine separate, parallel zur Kolbenstange geführten Welle - Einfluss genommen werden auf einen Durchflussquerschnitt des Fluids an wenigstens einer Stelle der Durchlassöffnung 4.2.

In diesem Zusammenhang ist ersichtlich, dass die Arretiervorrichtung - und mit ihr das oder die Einstellmittel - alternativ oder zusätzlich eine solche genannte Welle umfassen kann. Eine solche Welle kann parallel und/oder koaxial zur Kolbenstange angeordnet sein und/oder die Kolbenstange umfassen.

Ohne Arretiervorrichtung könnte sich einerseits der Kolben 4 gegenüber dem Zylinder 1 verdrehen und andererseits durch Veränderung seiner Drehlage gegenüber dem Zylinder 1 eine durch eine Drehbewegung vorgenommene Einstellung einer Begrenzung zumindest des größtmöglichen Durchflussquerschnitts des Fluids an der Durchlassöffnung 4.2 zunichtemachen.

Wichtig ist in diesem Zusammenhang hervorzuheben, dass im vorliegenden Dokument der Begriff Achse im Gegensatz zu dem Begriff Welle eine geometrische Achse und nicht ein Maschinenelement bezeichnet.

Alternativ oder zusätzlich können die Einstellmittel eine unverdrehbar auf der Kolbenstange 6 befestigte Kerbscheibe 7 umfassen. Mittels mindestens einer Kerbe 7.1 der Kerbscheibe 7 ist der Durchflussquerschnitt des Fluids an der Stelle mindestens einer auch als Fluiddurchlassöffnung bezeichneten Durchlassöffnung 4.2 des Kolbens 4 und/oder zwischen Kolben 4 und Zylinder 1 voreinstellbar. Eine weitere Kerbe 7.2 an der Kerbscheibe 7 kann mit einer Nase 4.4 an dem Kolben 4 in Eingriff stehen und eine Einstellbarkeit der Drosselung des Fluidstroms durch die Öffnung 4.2 beschränken. Die Drosselung des Fluidstroms kann insbesondere durch eine relative Position von Öffnung 4.2 und Kerbe 7.2 bewirkt sein.

Das oder die Einstellmittel umfasst/umfassen demnach vorteilhaft wenigstens eine zumindest den größtmöglichen Durchflussquerschnitt des Fluids an der mindestens einen Durchlassöffnung 4.2 beeinflussende Verstelleinrichtung. Das oder die Einstellmittel umfassen bevorzugt mindestens eine mit der Verstelleinrichtung zusammenwirkende beziehungsweise auf diese einwirkende, nachträglich von außen am betriebsbereiten fertig zusammengebauten und bevorzugt bereits zwischen gegeneinander verstellbaren Körpern eingebauten Fluiddämpfer zugängliche Betätigungseinrichtung. Diese ist zur Veränderung einer im Betrieb beziehungsweise bei einer Betätigung des Fluiddämpfers wirksamen Begrenzung zumindest des größtmöglichen Durchflussquerschnitts des Fluids an der Stelle der Durchlassöffnung 4.2 des Kolbens 4 und/oder zwischen Kolben 4 und Zylinder 1 per Voreinstellung ausgebildet. Im voranstehend beschriebenen Ausführungsbeispiel bildet die Kolbenstange 6 die Betätigungseinrichtung, welche von außen zugänglich ist und durch Verdrehen betätigt wird und dadurch auf die Drehlage der Kerbscheibe 7 einwirkt.

Die Verstelleinrichtung kann durch folgende Merkmale definiert sein:
- Die gegenüber der Kolbenstange 6 unverdrehbar angeordnete Kerbscheibe 7 mit ihrer mindestens einen Kerbe 7.1
- Welche den Kolben 4 in einer gewünschten Lage im Zylinder 1 festhält und damit ein gemeinsames Verdrehen der Kolbenstange 6 sowie des Kolbens 4 verhindernde Arretiervorrichtung
- mit dem Kolben die Umfangsposition der mindestens einen Durchlassöffnung 4.2 gegenüber dem Zylinder 1 festgelegt ist verhindernde Arretiervorrichtung.

Erfindungsgemäß besteht die Arretiervorrichtung aus folgenden Bauteilen:
- einem Arretierelement 2 in Form einer auf das Ende 6.1 der Kolbenstange aufbringbaren Hülse, deren dem geschlossenen Ende des Zylinders 1 zugewandtes Ende ein außenverzahntes Zahnrad 2.1 und am anderen Ende mindestens einen in den Kolben 4 eingreifenden Nocken 2.2 trägt,
- einem innen am geschlossenen Ende des Zylinders 1 angeordneten innenverzahnten Zahnrad 1.1, in welches das außenverzahnte Zahnrad 2.1 eingreift, und
- einem innen am geschlossenen Ende des Zylinders 1 angeordneten zentralen Konus 1.2, der die Zähne des außenverzahnten Zahnrads auseinander in das innenverzahnte Zahnrad 1.1 presst.

Am außerhalb des Zylinders 1 liegenden Ende der Kolbenstange 6 kann zur besseren Betätigung ein Einstellrad 9 drehfest befestigt sein.

Denkbar ist in diesem Zusammenhang zumindest eine Drehrichtungsangabe, beispielsweise in Form eins Pfeils oder Doppelpfeils mit beispielsweise symbolartig angegebener Vergrößerung und/oder Verkleinerung des Durchflussquerschnitts, beispielsweise durch ein Plus- und/oder ein Minussymbol und/oder einen großen und/oder einen kleinen Kreis, in welcher Richtung bei Drehung der Kolbenstange 6 gegenüber dem Zylinder 1 der Durchflussquerschnitt vergrößert und verkleinert wird.

Alternativ kann eine Skalierung vorgesehen sein, welche beispielsweise eine fortschreitende Vergrößerung und Verkleinerung abhängig von der Drehlage symbolisch wiedergibt.

Beispielsweise können auf bestimmte Anwendungsfälle optimierte Einstellpositionen gekennzeichnet sein, beispielsweise für Drehtüren, für nach oben öffnende Schapps, Fachklappen etc.

Vorzugsweise ist die Kolbenstange 6 mit einem verstellbaren Möbelteil in Kontakt bringbar. Der Zylinder 1 kann mit seinem kolbenstangenfreien geschlossenen Ende und einem feststehenden Möbelteil verbunden sein.

Der Zylinder 1 des Fluiddämpfers kann an seinem kurz auch als offene Stirnseite bezeichneten, frei von einer Durchführung der Kolbenstange 6 ausgeführten Ende mit einem Verschlussteil 8 verschlossen sein.

Zumindest einer Durchlassöffnung 4.2 kann mindestens ein gegenüber dem Kolben 4 federbelastetes Schließelement mit einer der Anzahl von Durchlassöffnungen 4.2 entsprechenden Zahl von Schließflächen 3.2 zugeordnet sein.

Beispielsweise kann das Schließelement mindestens einen im Kolben 4 drehbar gelagerten Flügel 3.1 umfassen. Dieser Flügel 3.1 kann fortschreitend beim Bewegen der Körper gegeneinander und dem mit dieser Bewegung einhergehenden Ineinanderfahren des Kolbens 4/der Kolbenstange und des Zylinders 1 durch fortschreitendes Eindringen des Kolbens 4 in den Zylinder 1 verschleißen. Der Verschleiß kann in Abhängigkeit von der Geschwindigkeit oder vom Druck auf die Kolbenstange 6 die Fluiddurchlassöffnung 4.2 im Kolben 4 und/oder zwischen Kolben 4 und Zylinder 1 gegen eine Federbelastung erfolgen.

Bei Stillstand und beim Bewegen der Körper voneinander weg stellt die Federbelastung den Flügel 3.1 zurück und gibt die Durchlassöffnung 4.2 frei. Beim voneinander wegfahren der Körper können der Kolbens 4 und der Zylinders 1 durch fortschreitendes Austauchen beziehungsweise Herausziehen oder -fahren des Kolbens 4 aus dem Zylinder 1 auseinander fahren.

Demnach kann das Schließelement mindestens einen im Kolben 4 drehbar gelagerten Flügel 3.1 umfassen. Dieser kann durch ein Bewegen des Kolbens 4 gegenüber dem Zylinder 1 in einer ersten Richtung, insbesondere ineinander, in Abhängigkeit von der Geschwindigkeit oder vom Druck auf die Kolbenstange 6 die Fluiddurchlassöffnung 4.2 im Kolben 4 und/oder zwischen Kolben 4 und Zylinder 1 gegen eine Federbelastung fortschreitend verschließen. Beim Bewegen des Kolbens 4 gegenüber dem Zylinder 1 in einer der ersten Richtung entgegengesetzten, zweiten Richtung, insbesondere auseinander, kann die Federbelastung den Flügel 3.1 zurückstellt und die Durchlassöffnung 4.2 freigegeben sein.

Ein Bewegen des Kolbens 4 gegenüber dem Zylinder 1 in einer ersten Richtung, insbesondere ineinander, kann dann stattfinden, wenn die Körper gegeneinander, also zueinander Bewegt werden.

Ein Bewegen des Kolbens 4 gegenüber dem Zylinder 1 in einer zweiten Richtung, die der ersten Richtung entgegengesetzt ist, insbesondere auseinander, kann erfolgen wenn die Körper auseinander, also
Voneinander weg Bewegt werden.

Die Federbelastung kann vorteilhaft mit einer nur wenig Bauraum benötigenden Schraubenfeder 3 erzeugt sein.

In Fig. 1 sind die Bauteile des Fluiddämpfers, die im Zylinder 1 anzuordnen sind, in zerlegter Bauweise dargestellt. Der in Fig. 1 gezeigte Fluiddämpfer besteht aus einem Zylinder 1, einem Arretierelement 2, einer Hülse 3 mit Flügel 3.1, einem Kolben 4, einer Schraubenfeder 5, einer Kolbenstange 6, einer Kerbscheibe 7, einem Verschlussteil 8 und einem Einstellrad 9. Der Dämpfer ist mit der geschlossenen Stirnseite des Zylinders 1 (linke Seite) an einem feststehenden Möbelteil befestigt. Der Zylinder 1 trägt nach Fig. 2 am geschlossenen Ende ein innen verzahntes Zahnrad 1.1 und einen zentrisch im Zahnrad 1.1 angeordneten Konus 1.2. In dieses innenverzahnte Zahnrad 1.1 kann ein außenverzahntes Zahnrad 2.1 des Arretierelements 2 eingreifen. Das Arretierelement 2 ist eine Zylinderhülse, die auf das Ende der Kolbenstange 6 aufgeklippst (Stelle 6.2) werden kann und die auf ihrer Außenfläche mindestens einen Nocken 2.2 (2.3) trägt. Der Nocken 2.2 greift in eine Ausnehmung des Kolbens 4 ein. Der bisher erläuterte Teil des Fluiddämpfers dient dazu, den Kolben 4 in einer gewählten Radialstellung zu halten.

Der Kolben 4 ist mit einem auf das verjüngte Ende 6.1 der Kolbenstange 6 aufschiebbaren zylindrischen Abschnitt 4.1 versehen, in dem eine Fluiddurchlassöffnung 4.2 gebildet ist. Der Außendurchmesser dieses zylindrischen Abschnitts 4.1 ist an den Innendurchmesser des Zylinders 1 angepasst. Zwischen dem Arretierelement 2 und dem Abschnitt 4.1 ist die den Flügel 3.1 tragende Hülse 3 auf das verjüngte Ende 6.1 der Kolbenstange 6 einfügbar. Die Einfügbarkeit ist derart, dass die Hülse sich radial auf dem Ende 6.1 drehen kann. Zwischen dem linken Ende der Hülse und dem Arretierelement 2 und/oder zwischen dem rechten Ende der Hülse 3 und dem Abschnitt 4.1 ist auf dem verjüngten Ende 6.1 der Kolbenstange 6 die Schraubenfeder 5 bzw. 5' einfügbar. Die Schraubenfeder ist mit ihrem einen Ende am Flügel 3.1 und mit ihrem anderen Ende an einem Anschlag 4.3 des Kolbens 4 abgestützt. Diese Schraubenfeder hält in der Ausgangsstellung des Fluiddämpfers den Flügel 3.1 in einer solchen Lage, dass seine Schließfläche 3.2 die Fluiddurchlassöffnung 4.2 nicht abdeckt (Fig. 2).

Die Kerbscheibe 7 mit einer Kerbe 7.1 auf ihrem Umfang ist auf dem verjüngten Ende 6.1 der Kolbenstange radial unverdrehbar befestigt, so dass sie mit dem Verdrehen der Kolbenstange 6 ebenfalls verdreht werden kann.

Das offene Ende des Zylinders 1 wird mit dem Verschlussteil 8 abgeschlossen, das im Außendurchmesser an den Innendurchmesser des Zylinders 1 angepasst ist. Dabei wird die Kolbenstange 6 drehbar durch das Verschlussteil 8 durchgeführt. Auf dem durch das Verschlussteil 8 durchgeführten Ende der Kolbenstange 6 ist das vorzugsweise mit einer Riefelung versehene Einstellrad 9 befestigt, das beim Schlie-ßen des verstellbaren Möbelteils mit dem verstellbaren Möbelteil in Kontakt gebracht werden kann.

Die Voreinstellung für den beabsichtigten Anwendungszweck erfolgt folgenderma-ßen.

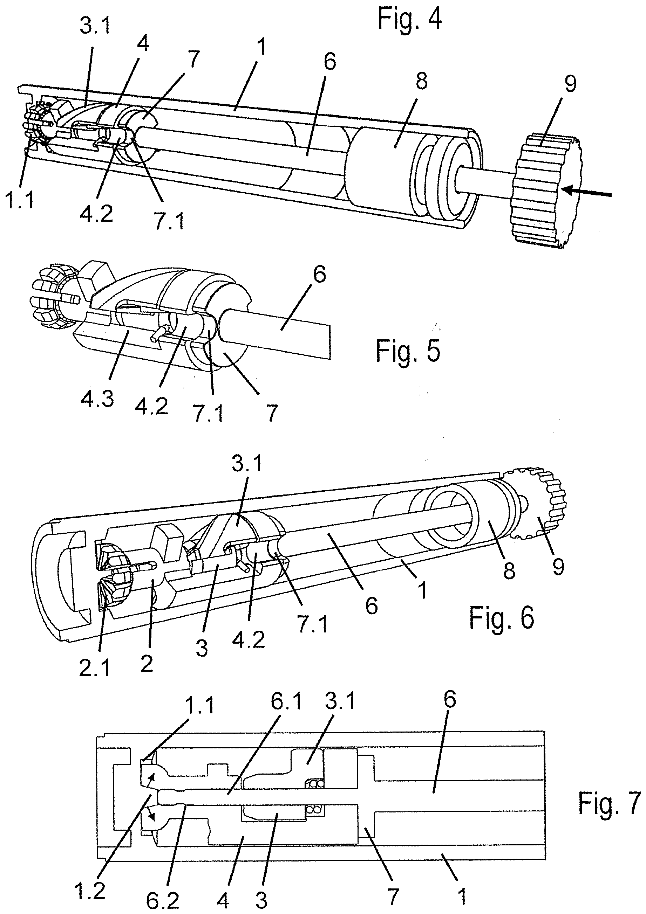

Durch manuellen Druck auf das Einstellrad 9 werden das innenverzahnte Zahnrad 1.1 und das außenverzahnte Zahnrad 2.1 in einer gewählten Radialstellung des Kolbens 4 in Eingriff gebracht, wie Fig. 7 zeigt. Dabei presst der Konus 1.2 die Zähne des außenverzahnten Zahnrads 2.1 auseinander und verkeilt sie mit den Zähnen des innenverzahnten Zahnrads 1.1. Damit ist die Radialstellung des Kolbens 4 festgelegt. Nun wird mittels des Einstellrads 9 die Kolbenstange 6 derart verdreht, dass die Kerbscheibe 7 entsprechend der Anwendung die Fluiddurchlassöffnung 4.2 mehr oder weniger verschließt. Damit ist der gewünschte Querschnitt der Öffnung des Kolbens 4 für das Fluid festgelegt. Der Konus 1.2 kann endseitig an einer Innenseite des Zylinders 1, vorzugsweise im Bereich des innenverzahnten Zahnrads 1.1, angeordnet sein.

Wie ebenfalls aus Fig. 7 hervor geht, werden die Zähne des Zahnrads 2.1 durch den Druck des Zahnrads 2.1, bzw. des Kolbens 4, auf den Konus 1.2 von einander weg bewegt, insbesondere in etwa radial nach außen. Zumindest werden die Zähne des Zahnrads 2.1 von einer Längsachse der Kolbenstange zumindest im Bereich der Stelle 6.2, welche auch als Kolbenstangenkopf bezeichnet werden kann, von der Kolbenstange 6 weg bewegt. Durch diese Bewegung der Zähne des Zahnrads 2.1 nach außen, können diese mit den Zähnen des Zahnrads 1.1 in Eingriff bringbar sein, wobei die Zähne des Zahnrads 1.1 im Übrigen von den Zähnen des Zahnrads 2.1 radial zur Längsachse der Kolbenstange 6 beabstandet sein können.

Durch den Druck des Zahnrads 2.1 auf den konischen Zylinder 1.2 kann eine unverdrehbare Verbindung zwischen Kolbenstange 6 und Kolben 4, insbesondere dem Arretierungselement 2 und der Kolbenstange6 zumindest temporär aufgehoben werden. Hierdurch kann eine reibungsarme Relativbewegung zwischen Kolbenstange 6 und Kolben 4 bzw. zwischen Kolbenstange 6 und Arretiervorrichtung 2, welche mit dem Kolben einstückig ausgebildet sein kann, ermöglicht sein.

Es kann als eine doppelte Unverdrehbarkeit vorliegen. Zum einen des Arretierungselements / Arretierungsvorrichtung gegenüber dem Kolben 4 und/oder eine Unverdrehbarkeit der Kolbenstange 6 gegenüber der Arretiervorrichtung 2 bzw. dem Kolben 4.

Der Bewegungsablauf beim Schließen und Öffnen der Körper mit niedriger und hoher Geschwindigkeit ist folgender.

Die Unverdrehbarkeit der Kolbenstange 6 gegenüber der Arretiervorrichtung 2 und/oder dem Kolben 4 kann insbesondere im Betriebszustand bestehen, also wenn der Fluiddämpfer seiner primären Funktion des gedämpften Verfahrens von Körpern zueinander erfüllt. Hingegen kann die Unverdrehbarkeit aufgehoben sein, gemäß den voranstehenden Ausführungen, während eine Dämpfungswirkung durch Verdrehen des Rades 9 und damit der Kolbenstange 6 bzw. der Kerbe 7. 1 gegenüber der Öffnung 4.2 justiert wird, wobei das Zahnrad 2.1 mit dem konischen Zylinder 1.2 in Eingriff stehen kann bzw. das Zahnrad 2.1 mit dem Zahnrad 1.1 in Eingriff stehen kann.

Bei niedriger Schließgeschwindigkeit fließt der Hauptstrom des Fluids nach Fig. 6 durch die Fluiddurchlassöffnung 4.2 und die voreingestellte Kerbe 7.1. Der Flügel 3.1 verharrt in einer Ausgangsstellung. Es entsteht nur eine minimale Bremswirkung.

Bei sehr großer Geschwindigkeit, d. h. bei sehr großem Druck der/auf die Kolbenstange 6 (z.B. beim Aufeinander Zuführen von Körpern/von Kolben und Zylinder, verschließt der Flügel 3.1 mit seiner Schließfläche 3.2 die Fluiddurchlassöffnung 4.2 so weit, dass nur noch ein kleiner Durchflussquerschnitt durch den Kolben 4 gegeben ist. Das Fluid fließt durch den äußeren Spalt zwischen dem Zylinder 1 und dem Kolben 4 und verursacht eine Gegenkraft.

Reduziert sich die Geschwindigkeit dabei, dann wird gegen Ende des Schließvorgangs der Körper durch die Schraubenfeder 5 eine Drehbewegung des Flügels 3.1 im Gegensinn bewirkt, der zu einem kontinuierlichen Öffnen der Fluiddurchlassöffnung 4.2 führt. Dies führt demzufolge zu einer Reduktion der Kolbengeschwindigkeit und einem weichen Anschlag der zu schließenden Körper.

Es ist ersichtlich, dass die Erfindung verwirklicht sein kann durch einen Fluiddämpfer für gegeneinander verstellbare Körper mit einem in einem Zylinder 1 verstellbar geführten Kolben 4, der mit einer aus dem Zylinder 1 herausgeführten Kolbenstange 6 verbunden ist, die mit dem verstellbaren Möbelteil in Kontakt bringbar ist, wobei
- der Zylinder 1 mit dem kolbenstangenfreien geschlossenen Ende und dem feststehenden Möbelteil verbunden ist und im Kolben 4 mindestens eine Durchlassöffnung 4.2 für ein im Zylinder 1 befindliches Fluid vorgesehen ist,
- beim Bewegen der Körper gegeneinander und der damit stattfindenden Bewegung von Kolben 4 und Zylinder 1 ineinander unter Ineinanderfahren von Kolben 4 und Zylinder 1 durch fortschreitendes Eindringen des Kolbens 4 in den Zylinder 1 in Abhängigkeit von der Geschwindigkeit oder vom Druck auf die Kolbenstange 6 ein im Kolben 4 drehbar gelagerter Flügel 3.1 die Fluiddurchlassöffnung 4.2 im Kolben 4 fortschreitend verschließt und beim Bewegen der Körper voneinander und der damit stattfindenden Bewegung des Kolbens 4 und des Zylinders 1 auseinander unter Auseinanderfahren von Kolben 4 und Zylinder 1 durch fortschreitendes Herausziehen oder -fahren des Kolbens 4 aus dem Zylinder 1 eine Schraubenfeder 3 den Flügel 3.1 zurückstellt und die Durchlassöffnung 4.2 freigibt,
- der Kolben 4 zylinderförmig ausgebildet und mit dem Außendurchmesser an den Innendurchmesser des Zylinders 1 angepasst ist,
- der Zylinder 1 an der offenen Stirnseite mit einem Verschlussteil 8 verschlossen ist,
wobei auf das im Zylinder befindliche Ende der Kolbenstange 6 eine den Kolben 4 in eine gewünschte Lage im Zylinder 1 festhaltende Arretiervorrichtung radial unverdrehbar aufgeschoben ist, und wobei auf der Kolbenstange 6 eine Kerbscheibe 7 unverdrehbar befestigt ist, mittels deren Kerbe 7.1 der Durchflussquerschnitt des Fluids an der Stelle der Fluiddurchlassöffnung 4.2 des Kolbens 4 voreinstellbar ist.

## Patentansprüche

1. Fluiddämpfer für gegeneinander verstellbare Körper mit einem in einem Zylinder (1) verstellbar geführten Kolben (4), wobei im Kolben (4) und/oder zwischen Kolben (4) und Zylinder (1) zumindest eine Durchlassöffnung (4.2) für durchströmendes Fluid ausgebildet ist, dass der Kolben (4) mit einer aus dem Zylinder (1) herausgeführten Kolbenstange (6) verbunden ist,
wobei
- die Durchlassöffnung ein Einstellmittel zur Einstellung einer Begrenzung zumindest des größtmöglichen Durchflussquerschnitts des Fluids an wenigstens einer Durchlassöffnung (4.2) am betriebsbereiten Fluiddämpfer aufweist, dass die Einstellmittel eine Arretiervorrichtung te aufweisen, die den Kolben (4) in einer gewünschten Lage im Zylinder (1) festhält,
- die Arretiervorrichtung auf das im Zylinder befindliche Ende der Kolbenstange (6) radial unverdrehbar angebracht ist,
- die Unverdrehbarkeit der Arretiervorrichtung gegenüber der Kolbenstange (6) durch einen Reibschluss bewirkt ist, welcher beim formschlüssigen Eingriff der Arretiervorrichtung in einen Teil des Zylinders überwindbar ist, die Arretiervorrichtung bestehend aus:
- einem Arretierelement (2) in Form einer auf das Ende (6.1) der Kolbenstange aufbringbaren Hülse, deren dem geschlossenen Ende des Zylinders (1) zugewandtes Ende ein außenverzahntes Zahnrad (2.1) und am anderen Ende mindestens einen in den Kolben (4) eingreifenden Nocken (2.2) trägt,
- einem innen am geschlossenen Ende des Zylinders (1) angeordneten innenverzahnten Zahnrad (1.1), in das das außenverzahnte Zahnrad (2.1) eingreift, und
- einem innen am geschlossenen Ende des Zylinders (1) angeordneten zentralen Konus (1.2), der die Zähne des außenverzahnten Zahnrads auseinander in das innenverzahnte Zahnrad (1.1) presst.

2. Fluiddämpfer nach Anspruch 1,
wobei die Einstellmittel eine unverdrehbar auf der Kolbenstange (6) befestigte Kerbscheibe (7), mittels deren mindestens einer Kerbe (7.1) der Durchflussquerschnitt des Fluids an der Stelle der zumindest eine Durchlassöffnung (4.2) des Kolbens (4) und/oder zwischen Kolben (4) und Zylinder (1) voreinstellbar ist, umfassen.

3. Fluiddämpfer nach Anspruch 1 oder 2,
wobei am außerhalb des Zylinders (1) liegenden Ende der Kolbenstange (6) ein Einstellrad (9) drehfest befestigt ist.

4. Fluiddämpfer nach einem der Ansprüche 1 bis 3,
wobei die Kolbenstange (6) mit einem verstellbaren Möbelteil in Kontakt bringbar ist.

5. Fluiddämpfer nach einem der voranstehenden Ansprüche,
wobei der Zylinder (1) mit dem kolbenstangenfreien geschlossenen Ende mit einem feststehenden Möbelteil verbunden ist.

6. Fluiddämpfer nach einem der voranstehenden Ansprüche,
wobei der Kolben (4) zylinderförmig ausgebildet und mit dem Außendurchmesser an den Innendurchmesser des Zylinders (1) angepasst ist.

7. Fluiddämpfer nach einem der voranstehenden Ansprüche,
wobei der Zylinder (1) an der offenen Stirnseite mit einem Verschlussteil (8) verschlossen ist.

8. Fluiddämpfer nach einem der voranstehenden Ansprüche,
wobei der mindestens einen Durchlassöffnung (4.2) mindestens ein gegenüber dem Kolben (4) federbelastetes Schließelement mit einer der Anzahl von Durchlassöffnungen (4.2) entsprechenden Zahl von Schließflächen (3.2) zugeordnet ist.

9. Fluiddämpfer nach Anspruch 8,
wobei das Schließelement mindestens einen im Kolben (4) drehbar gelagerten Flügel (3.1) umfasst, welcher beim Bewegen des Kolbens (4) gegenüber dem Zylinder (1) in einer ersten Richtung in Abhängigkeit von der Geschwindigkeit oder vom Druck auf die Kolbenstange (6) die Fluiddurchlassöffnung (4.2) im Kolben (4) und/oder zwischen Kolben (4) und Zylinder (1) gegen eine Federbelastung fortschreitend verschließt und beim Bewegen des Kolbens (4) gegenüber dem Zylinder (1) in einer der ersten Richtung entgegengesetzten, zweiten Richtung die Federbelastung den Flügel (3.1) zurückstellt und die Durchlassöffnung (4.2) freigibt

10. Fluiddämpfer nach Anspruch 8,
wobei eine Schraubenfeder (3) die Federbelastung erzeugt.

## Claims

1. Fluid damper for adjustable bodies with a piston (4) adjustable in a cylinder (1), whereby in the piston (4) and/or between piston (4) and cylinder (1) at least a passage (4.2) for flowing fluid It is trained that the piston (4) is connected to a piston rod (6) led out of the cylinder (1), whereby the passage opening comprises adjusting means to adjust a limitation at least the largest possible flow cross-section of the fluid at least at a passage opening (4.2) at the operating fluid damper wherein the adjusting means have an locking device (2) which holds the piston (4) in a desired location in the cylinder (1 ), wherein
- the locking device on the end of the piston rod (6) in the cylinder is indispensable in a radial manner
- the undistocracy of the locking device compared to the piston rod (6) is caused by a friction closure, which can be overcome when the locking device interfaces in a locking manner with a part of the cylinder
- a locking element (2) in the form of a sleeve which can be mounted on the end (6.1) of the piston rod and whose end facing the closed end of the cylinder (1) carries an externally toothed gear (2.1) and at the other end at least one cam (2.2) engaging in the piston (4),
- an internal toothed gear (1.1) arranged on the inside of the cylinder (1), into which the external toothed gear (2.1) intervenes, and
- a central cone (1.2) arranged on the inside of the cylinder (1), which presses the teeth of the external toothed gear apart into the interior toothed gear (1.1).

2. Fluid damper according to claim 1,
wherein the adjusting means comprise a notched disc (7) which is non-rotatably mounted on the piston rod (6) and by means of whose at least one notch (7.1) the flow cross-section of the fluid can be pre-set at the location of the at least one passage opening (4.2) of the piston (4) and/or between the piston (4) and the cylinder (1).

3. Fluid damper according to claim 1 or 2,
Wherein a setting wheel (9) is attached to the end of the piston rod (6) on the end of the cylinder (1).

4. Fluid damper according to one of claims 1 to 3,
Wherein the piston rod (6) can be brought into contact with an adjustable furniture part.

5. Fluid damper according to one of the above claims,
Wherein the cylinder (1) is connected to the piston rod-free closed end with a non-moving furniture part.

6. Fluid damper according to one of the above claims,
Wherein the piston (4) is formed in a cylindrical manner and is adapted to the inner diameter of the cylinder (1) with the outside diameter.

7. Fluid damper according to one of the above claims,
Wherein the cylinder (1) is closed with a locking part (8) on the open front.

8. Fluid damper according to one of the above claims,
wherein at least one passage (4.2) is at least one compared to the piston (4) spring - loaded closing element with a number of closing areas (3.2) corresponding to the number of passage openings (4.2).

9. Fluid damper according to claim 8,
wherein the closure element includes at least one wing (3.1) rotatably located on the piston (4), which when moving the piston (4) compared to the cylinder (1) in a first direction depending on the speed or pressure on the piston rod (6), the fluid release (4.2) in the piston (4) and/or between the piston (4) and cylinder (1) progressively closes against a spring load and when moving the piston (4) compared to the cylinder (1) in one of the first direction opposite direction the spring pollution puts the wing (3.1) back and the passage (4.2) releases (4.2)

10. Fluid damper according to claim 8,
Wherein a screw spring (3) generates the spring load.

## Revendications

1. Amortisseur à fluide pour corps déplaçables les uns par rapport aux autres avec un piston (4) guidé de manière déplaçable dans un cylindre (1), au moins une ouverture de passage (4.2) pour un fluide y passant étant prévue dans le piston (4) et/ou entre le piston (4) et le cylindre (1), le piston (4) étant relié à une tige de piston (6) qui sort du cylindre (1),
dans lequel
- l'ouverture de passage comporte un moyen de réglage pour régler une limitation d'au moins la plus grande section de passage possible du fluide au niveau d'au moins une ouverture de passage (4.2) sur l'amortisseur de fluide opérationnel, les moyens de réglage comportant un dispositif d'arrêt qui maintient le piston (4) dans une position souhaitée dans le cylindre (1),
- le dispositif d'arrêt est fixé à l'extrémité de la tige de piston (6) se trouvant dans le cylindre de manière à ce qu'il ne puisse pas être tourné radialement,
- l'impossibilité de rotation du dispositif d'arrêt par rapport à la tige de piston (6) est réalisée par une friction, qui peut être surmontée lorsque le dispositif d'arrêt s'engage de manière complémentaire dans une partie du cylindre, le dispositif d'arrêt consistant en :
- un élément d'arrêt (2) sous la forme d'un manchon emboîtable sur l'extrémité (6.1) de la tige de piston, dont l'extrémité tournée vers l'extrémité fermée du cylindre (1) comporte une roue à denture extérieure (2.1) et porte à l'autre extrémité au moins une came (2.2) s'engageant dans le piston (4),
- une roue à dentée intérieure (1.1) disposée à l'intérieur de l'extrémité fermée du cylindre (1) et dans laquelle s'engrène la roue à denture extérieure (2.1), et
- un cône central (1.2) situé à l'intérieur de l'extrémité fermée du cylindre (1) qui écarte les dents de la roue à denture extérieure dans la roue à denture intérieure (1.1).

2. Amortisseur à fluide selon la revendication 1,
dans lequel les moyens de réglage comprennent un disque cranté (7) fixé de manière non rotative sur la tige de piston (6) et la section d'écoulement du fluide au point de la au moins une ouverture de passage (4.2) du piston (4) et/ou entre les pistons (4) et le cylindre (1) peut être préréglée au moyen d'au moins une encoche (7.1) du disque cranté (7).

3. Amortisseur à fluide selon la revendication 1 ou 2,
dans lequel une molette de réglage (9) est fixée de manière non rotative à l'extrémité de la tige de piston (6) située à l'extérieur du cylindre (1).

4. Amortisseur à fluide selon l'une des revendications 1 à 3,
dans lequel la tige de piston (6) peut être amenée en contact avec une partie déplaçable d'un meuble.

5. Amortisseur à fluide selon l'une des revendications précédentes,
dans lequel le cylindre (1) est, avec l'extrémité fermée exempte de tiges de piston, relié à une partie fixe d'un meuble.

6. Amortisseur à fluide selon l'une des revendications précédentes,
dans lequel le piston (4) est cylindrique et son diamètre extérieur est adapté au diamètre intérieur du cylindre (1).

7. Amortisseur à fluide selon l'une des revendications précédentes,
dans lequel le cylindre (1) est fermé à l'extrémité ouverte avec une pièce de fermeture (8).

8. Amortisseur à fluide selon l'une des revendications précédentes,
dans lequel à la au moins une ouverture de passage (4.2) est associée au moins un élément de fermeture qui est relié par ressort au piston (4) et qui présente un nombre de surfaces de fermeture (3.2) correspondant au nombre d'ouvertures de passage (4.2).

9. Amortisseur à fluide selon la revendication 8,
dans lequel l'élément de fermeture comprend au moins une aile (3.1) montée de manière rotative dans le piston (4) et qui, lorsque le piston (4) est déplacé par rapport au cylindre (1) dans une première direction, ferme, selon la vitesse ou la pression sur le la tige de piston (6), progressivement l'ouverture de passage de fluide (4.2) dans le piston (4) et/ou entre le piston (4) et le cylindre (1) contre une force de ressort et, lorsque le piston (4) se déplace par rapport au cylindre (1) dans une deuxième direction opposée à la première direction, la force de ressort retire l'aile (3.1) et libère l'ouverture de passage (4.2).

10. Amortisseur à fluide selon la revendication 8,
dans lequel un ressort hélicoïdal (3) génère la force de ressort.
